# EUROPEAN PATENT APPLICATION

(11) **EP 4 397 412 A1**
(43) Date of publication of application: **10.07.2024**
(21) Application number: 24150136.0
(22) Date of filing: 03.01.2024
(51) Int. Cl.: B01L 3/02, G01N 35/10, B01L 3/00, G01N 1/40

(54) **HIGH THROUGHPUT VACUUM EXTRACTION PROCESS**

(30) Priority: 06.01.2023 US 202363478832 P
(71) Applicant: DPX Technologies, LLC, Columbia, SC 29203 (US)
(72) Inventor: BREWER, William, Columbia, SC 29203 (US); ILLINGWORTH, Arthur, Columbia, SC 29203 (US); MEEH, Paul, Columbia, SC 29203 (US)
(74) Representative: Henderson, Helen Lee

(57) **Abstract**

A process and system for automated extractions using a vacuum system is disclosed. The process includes the use of the robotic liquid handler's pipetting head for performing the elution step, thereby minimizing potential cross-contamination and improving throughput. The various disposable devices are designed to meet with each other at an angle of 7-90° from vertical to provide an air-tight, yet easily reversible seal. They are designed to fit together with minimal wobble, ensuring placement to allow a vacuum seal. An optional protective sheath is also provided to protect columns from tip contamination, the sheath not requiring the vacuum seal.

## Description

### PRIOR RELATED APPLICATIONS

This application claims priority to US Serial No. 63/478,832, filed 01/06/2023 and incorporated by reference in its entirety for all purposes.

### FEDERALLY SPONSORED RESEARCH STATEMENT

Not applicable.

### REFERENCE TO MICROFICHE APPENDIX

Not applicable.

### FIELD OF THE DISCLOSURE

The disclosure relates generally to the field of chemical and biological sample preparation. Specifically, devices and methods for assaying sample solutions using robotics for high throughput, wherein the various devices are designed so as to allow an easily reversible, yet air-tight vacuum seal by controlling the angle at which two parts meet.

### BACKGROUND OF THE DISCLOSURE

A large variety of disposable parts are available for biological and chemical assay, including pipette tips, extraction columns, and wells for assay reactions or collection of eluate. In order to provide high-throughput of scvvvuch assays, these parts have also been developed in an array format designed to be compatible with robotic systems that can move entire plates, and pipette an entire plate worth of wells at the same time. Thus, there are microtiter plates and robotic handlers designed to fit microtiter plates, such as 3X4 (12 wells), 4X6 (24 wells), or 8X12 (96 wells). There are also 384 and 1536 well plates, but volumes are highly limited with these denser plates. All of these plates are made to exacting ANSI standards so that they are compatible across a wide range of robotic handlers.

For high throughput methods using robotic liquid handlers, either vacuum or positive pressure manifolds are used. However, for microtiter plates, the entire plate has a gasket or seal around its edge, and the plate as a whole creates a vacuum seal or positive pressure seal. This presents several impediments to more rapid processing.

For example, several steps are required in order to collect eluate from an array of colums using vacuum. After loading the sample solution and washing the sorbent, the vacuum is turned off, the system is vented, the vacuum block "top" is removed, the well plate collecting the sample and wash solutions (waste) is removed, and then a collection well plate is positioned in the vacuum system. The vacuum block top is returned, the vacuum turned on, and then the elution solvent is added and the eluate subsequently collected. After these steps, once again, the vacuum must be turned off and the system vented, the vacuum block top removed, and then the eluate collection plate removed with robotic grippers. To load the next set of samples, another plate to collect waste is loaded, the vacuum block top returned, and the process continued.

Due to all of the cumbersome steps, especially the movement of the vacuum block, positive pressure manifolds have become prevalent in high throughput robotic systems. In this case, the plates for sample and wash solutions are moved in and out of position by using a plate gripper to the manifold positioned on the side of the robotic deck. This requires fewer steps than having to move a vacuum block top in and out of position each time samples are processed. However, it is not uncommon for a failure to occur during the movements of these robotic steps, and these manifolds require additional bench top space that is often unavailable (as opposed to a vacuum block that may be positioned directly on the robotic deck).

The fastest throughput for extraction would actually be one that uses a vacuum system in which the sample solution and wash solvents are readily sent to waste, and then uses the pipettor head of the robotic liquid handler to move the extraction devices to a well plate for elution. In this case, the vacuum block top would not have to be moved, and the steps and total extraction time would be greatly reduced. In addition, since the vacuum block is not repeatedly moved, the possibility of contamination is also reduced.

Thus, there exists a need for an extraction process that is designed to work with a vacuum system and the pipetting head, and avoid loss of vacuum between steps. The ideal system would allow samples to be quickly loaded onto the extraction device, washed, and subsequently eluted into the well plate for the most efficient sample processing. The ideal system would also ensure cross contamination concerns are minimized if not eliminated.

### SUMMARY OF THE DISCLOSURE

Disclosed herein are components, systems and processes to allow for insertion and removal to a vacuum system wherein the components are specifically designed to allow a vacuum seal that is both air tight **and** easily reversible, such that the pipette head portion of the robotic handler can handle all changes and avoid the need to manipulate the vacuum block. Specifically, the parts are designed to meet a mated part with an at least 7° angle and up to 90°. Since each component disclosed herein meets these specifications, each can be placed and removed with the pipette handler, rather than moving the vacuum block.

Having an air-tight reversible seal is not the only design consideration however. The optimal designs also allow for good alignment of parts, preventing wobble, and preventing or minimizing cross-contamination, permiting force fitting with the robotic pipettor head, and providing air-tight seal that is readily removable by the robotic pipettor head.

Next we will describe the parts generally starting from the bottom and working upward, and then we will describe how to use the system.

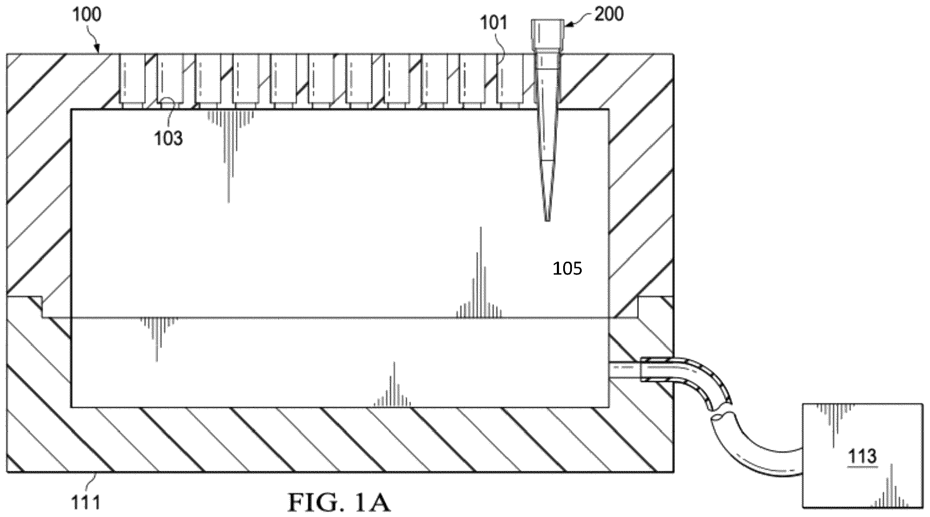

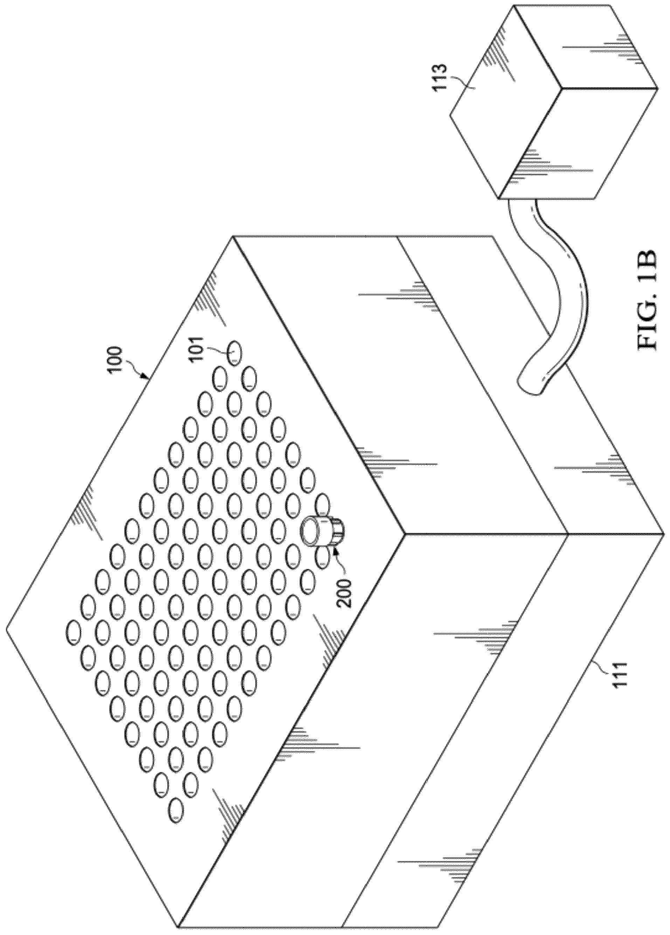

The vacuum block (**FIG. 1**) is designed such that its holes fit specific vacuum connectors, providing at least a 7-90° angle where the two parts touch. An angle of 4° is insufficient, as that angle provides that the parts will stick together with enough force to lift the entire vacuum block, and any devices cannot therefor be removed by the robotic pipettor head. In addition, the vacuum block is hollow at its lower end, being designed to fit with a waste receptacle which is connected to a vacuum pump. The waste receptacle and it's connections to the block are standard and are not modified herein, thus we have omitted details thereof.

The holes or tunnels through the vacuum block are preferably not cylindrical, but have a step down or gradation such that the base of the hole is smaller than the top, thus providing for better alignment of any parts being inserted thereinto. If the holes or tunnels through the block were cylindrical, considerable wobble would be allowed, impeding the creation of a vacuum seal and potential for robotic error due to misalignment. Depending on the application, it may also be preferred that the vacuum connector protrude from the holes, into the hollow base of the vacuum block, being visible if tipped up to look. In other applications, the vacuum connector need not protrude.

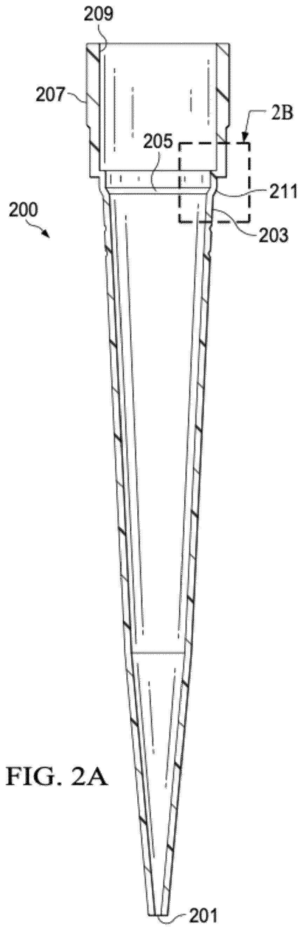

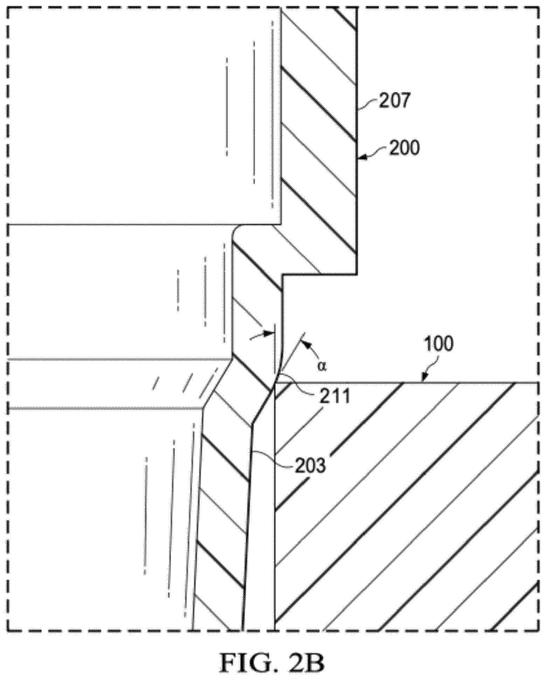

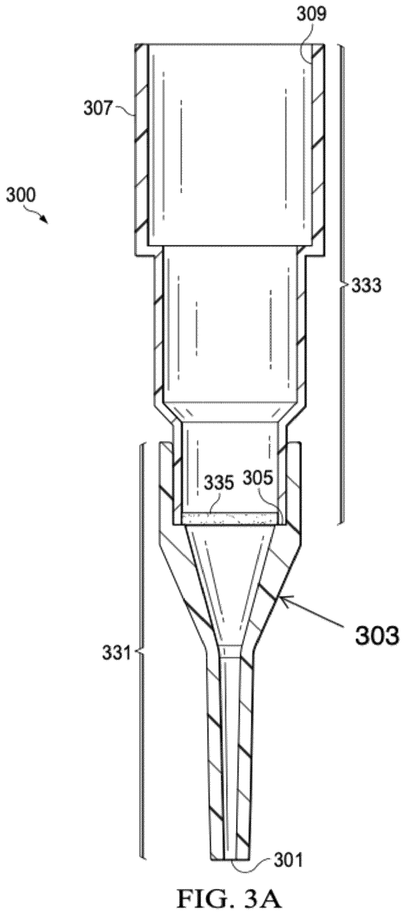

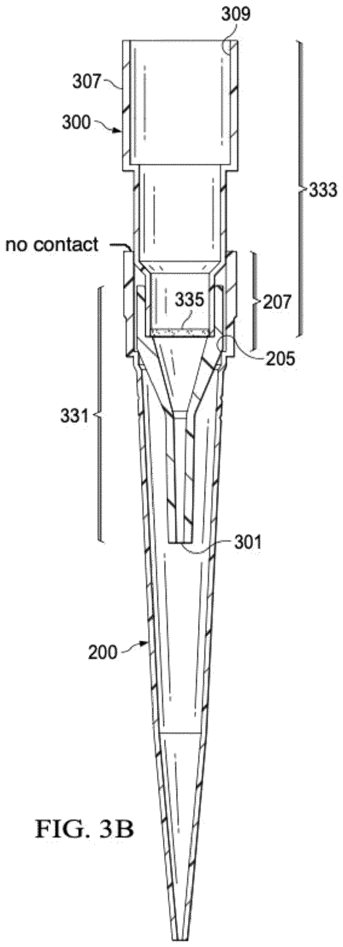

The hollow tube vacuum connector can be any suitable shape, including generally pipette tip (aka funnel shape) or buchner funnel shaped, provided that the outer surface has a ridge or surface circumventing the vacuum connector, that will contact the hole edge of the vacuum block at an angle of at least 7-90°. In the vacuum connector of **FIG. 2****,** we have shown a curved exterior surface ridge with a contact angle of 45°, but this is not essential, and a tapered surface could be used as well, provided it is in the 7-90° range. Indeed, a tapered surface of 21° is shown in **FIG. 3****,** though it is a different part. There is also an interior ridge for vacuum mating with the next part-herein the membrane extraction column or device. This ridge also has a curved edge, and meets the next component at the desired angle, and the same principles apply.

**FIG. 3** shows a hollow tube extraction device, which is manufactured in two parts to support an extraction membrane or disc. Thus, there is a lower buchner funnel shaped portion, wherein a membrane or disc lays on a ridge circumvening the interior of the device. A cap portion fits thereon and has an upper hub specifically designed to connect with the pipette head of a robotic liquid handler. Herein, the mated surfaces between the lower membrane portion and the upper cap have a taper of less than 7°, preferably in the 1-6° or 2-4° range since these parts are **supposed** to stick together to form the membrane extraction column.

It should be noted that the membrane or disc should have a porosity of about 3 µm or less for the extraction process to work ideally with this vacuum system. This is because there is great surface tension at the top surface of the membrane or disc when it is wet and in contact with liquid below. Hence, this surface tension allows for all 24 or 96 samples to be passed through the membrane or disc with ample vacuum. If there was not high surface tension, then the first extraction device that becomes "dry" would break the vacuum by creating a large leak in the system. Of course the smaller the pores of the membrane or disc, the less leakage will occur due to inherent impediment in the air flow.

The exterior of the buchner funnel portion of the extraction device is at about 21° from vertical so that it sits on the interior ridge of the vacuum connector in an air-tight and easily reversible way. The 21° angle is not essential, however, and it could also be anywhere between 7-90°, but to allow significant interior volume and yet still allow rapid drainage, the angle is preferably between 15° and 60° or about 45°. The tapered 21° portion sits atop a narrow tip portion or needle-like tip, but again the length and diameter can vary. We prefer the needle-like proportions because it provides for accurate elution without splashing. Further, it can be wholly inside the length of the disposable vacuum connector, ensuring zero contact with the vacuum block, which may become contaminated with waste solutions. In addition, the needle-like dimensions allow for the elution process to occur into the wells of a 384 well plate for very high throughput.

The length of the wider upper portion of the membrane extraction column can increase if more sample capacity is desired, but greater length can lead to more wobble when being handled by the robotic liquid handler, which can prevent a good vacuum seal or cause misalignment (resulting in robotic error). Thus, shorter lengths in the 1-3 inch range are preferred in the 96 well microtiter plate format. Preferably 1-2 or 1-1.5 inch lengths are used.

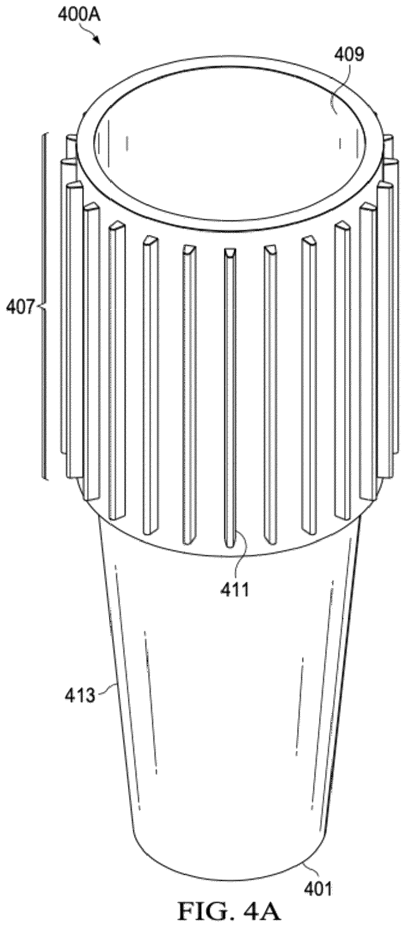

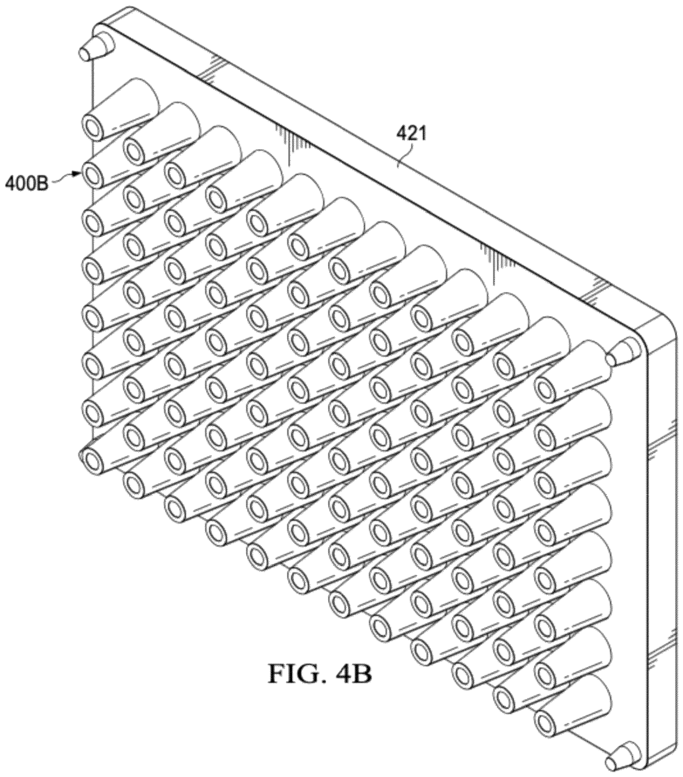

To allow pipetting into the extraction device without risking contamination, a hollow tube sheath is designed to provide protection from pipette tips (**FIG. 4**). The sheath merely sits on top of the membrane extraction device, no vacuum seal being needed for this part. However, the top has the same hub configuration needed to mate with a pipette head. This particular embodiment has vertical fins on an exterior surface providing a surface to sit on top of the membrane extraction device (here at a 90° angle), but an exterior annular ridge (as shown on other parts) would suffice as well.

While the upper portion or hub of the sheath is designed to fit over a robotic pipette head, the lower end may vary, so long as it prevents the pipette tip that is delivering sample solution from contacting the interior surface of the membrane extraction column. In one embodiment, the end is sized to allow the pipette tip to protrude therethrough in applications where sample is desired to be dispensed as close to the membrane as possible. The opening is sized, however, to prevent the tip from wobbling enough to touch the sides of the membrane extraction column. In other embodiments, the length of the sheath is such that a pipette tip will reach almost to the membrane, so no protrusion is needed.

In yet another embodiment, the bottom of the sheath tapers at <7° C, e.g., 1-6° or preferably 2-4°, such as to provide a friction fit with a specifically sized pipette tip. This allows both the tip and the sheath to be disposed of at the same time. Alternatively, the sheath may include an interior annular gasket to cause the parts to stay together, however, this is less preferred as it complicates manufacture and adds cost. In yet other embodiments, the tip and sheath do not stick together and they are disposed by two separate pipette head movements. This may be the most preferred design as separate sheaths would not be needed for differently sized pipettes.

Instead of individual sheaths, a plurality (such as 12, 24 or 96) can be combined into a plate as in **FIG. 4B****,** which we refer to as a funnel plate, since the individual sheaths have a shape like a funnel (and note that the top of these funnels do not have to fit the pipette head as in **FIG. 4A**). The funnel plate can be moved using robotic plate grippers or paddles, which are commonplace for robotic liquid handlers. The main advantage of using a funnel plate is that the plate does not come in contact with the pipettor head and cannot physically cause contamination.

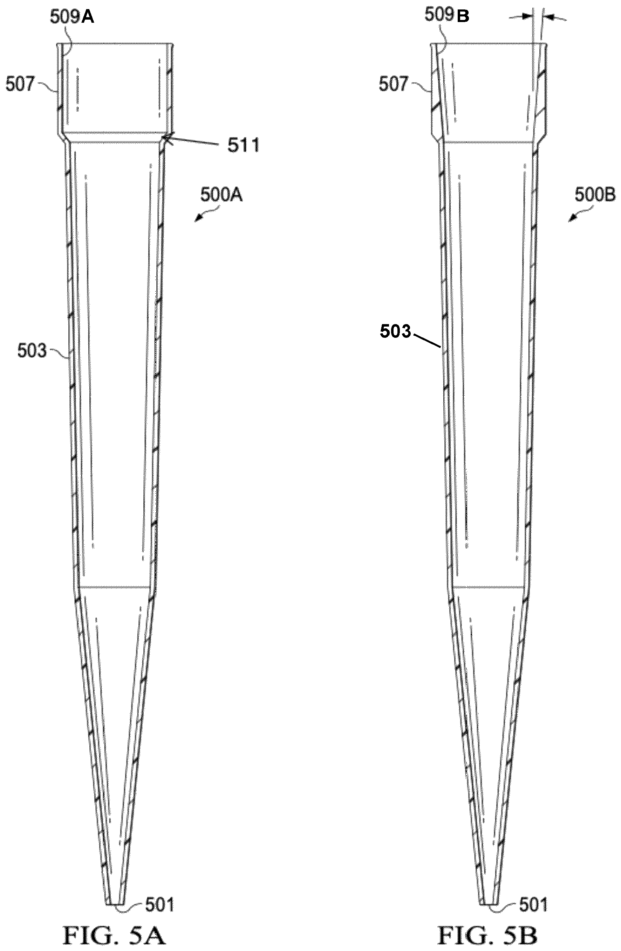

Finally, in **FIG. 5** is a pipette tip. The pipette tip in **FIG. 5A** shown has an inner and outer ridge. Hence, this pipette tip can be used as a vacuum connector. The inner ridge can be used to support the membrane extraction device **300** by making contact at postion **303.** The hub (upper cylindrical portion) of the pipette tip helps to align the membrane extraction device **300.** The outer ridge of the pipette tip is used to make an air tight seal by making contact to the vacuum block at the hole made. With a 90 degree cut (standard hole), the angle made at the ridge would be approximately 45 degrees. The pipette tip in **FIG. 5B** cannot be used as a vacuum connector because there is no inner ridge to mate with a membrane extraction device and create a vacuum.

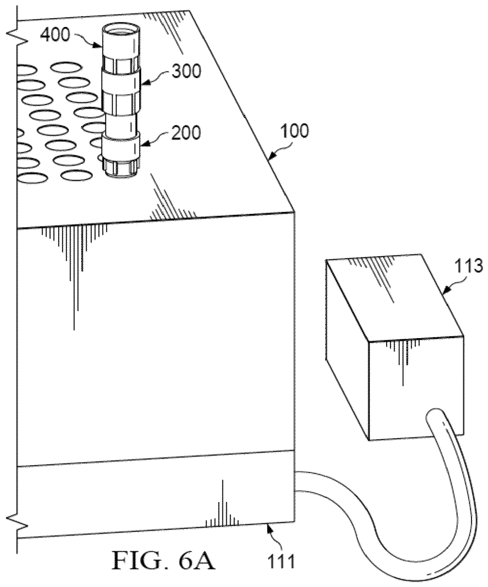

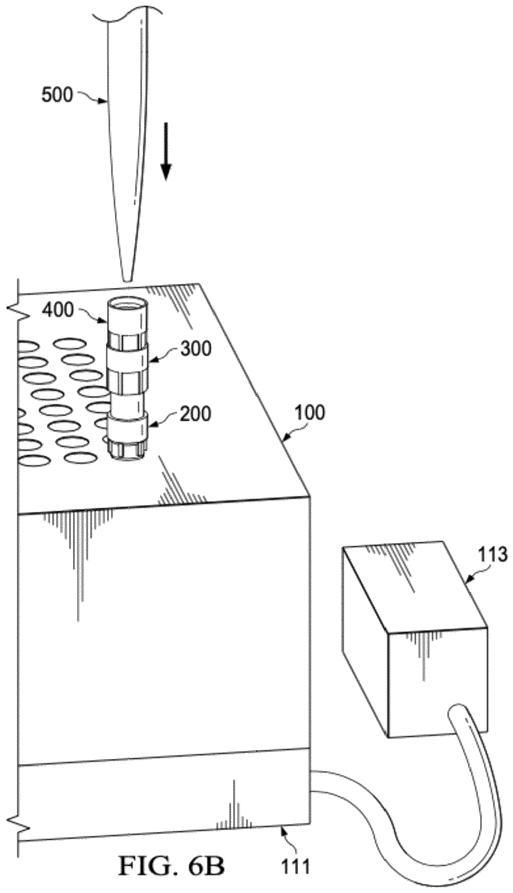

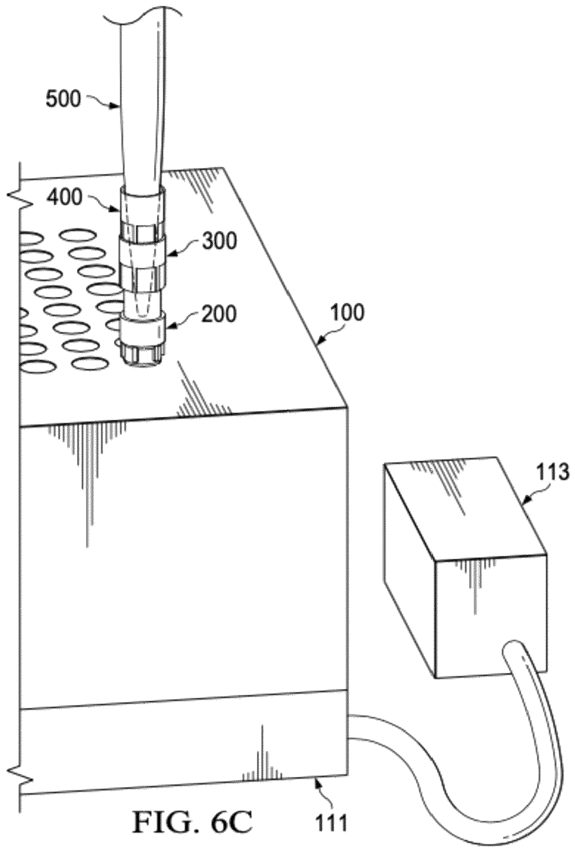

FIG. 6A-C shows the system as a whole, but with only a single vacuum connector **200,** membrane extraction device **300,** and sheath **400** stacked on top of the vacuum block for clarity. The vacuum connector **200** shown is a 300 µL Hamilton CO-RE II pipette tip. This tip has an outer ridge that makes direct contact with the hole in the vacuum block. This tip also contains an inner ridge that is used with the Hamilton CO-RE II technology. This inner ridge is used to hold and support the inserted membrane device, and to provide the necessary air-tight seal for the vacuum system. The sheath **400** is loosely placed on top of the extraction device, but protrudes deep enough inside the extraction device so as to completely cover its hub and prevent contact from a delivery pipette tip (ie, the pipette tip that delivers the sample solution). The delivery pipette tip **500** is shown approaching the sheath in **FIG. 6B** and inside the sheath in **6C.**

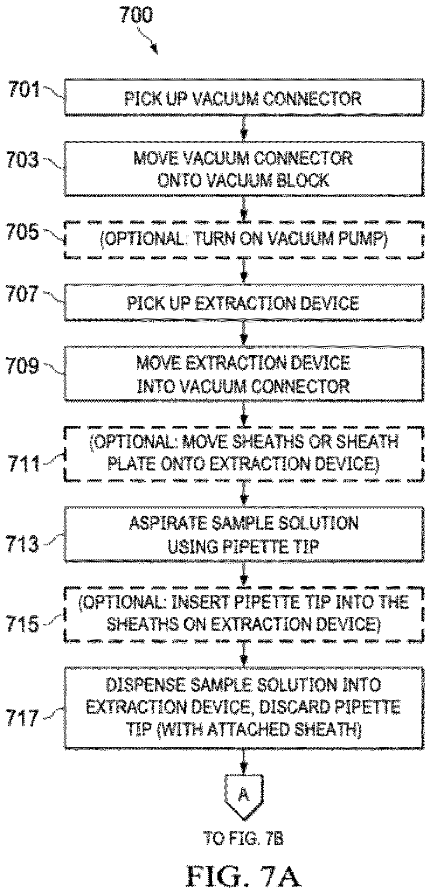

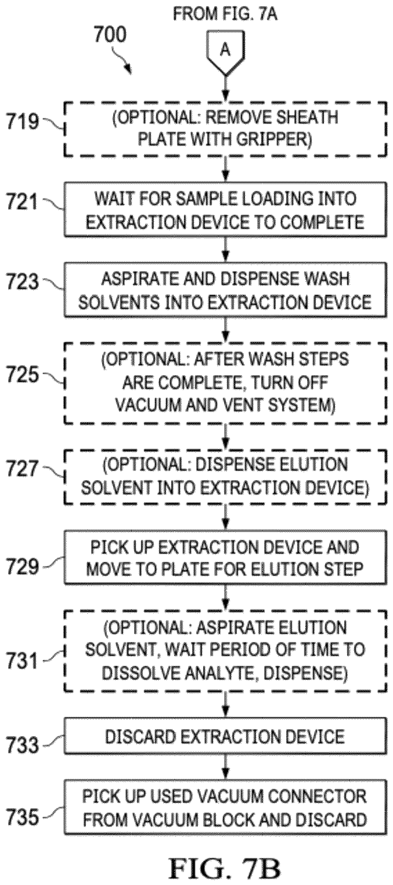

Turning now to methods of use, as in **FIG. 7****,** the vacuum block is set up on the robotic liquid handler and connected to a waste reservoir and vacuum pump. The robotic liquid handler picks up an array of vacuum connectors using the pipette head, and sets them down into the holes of the vacuum block. It should be noted that the vacuum connectors, since they are readily washed with solvents, do not have to necessarily be disposable. In many applications, washing the vacuum connectors is all that is needed to prevent contamination. However, some applications may prefer the vacuum connectors to be disposable.

Next an array of membrane extraction devices is picked up and set into the vacuum connectors. An optional but preferred next step is to pick up an array of sheaths (funnel plate 700) to minimize contamination, and these are set into the membrane extraction devices. These can be indivudally placed with a pipette head, or moved with a pipette head or plate gripper if in an integral array.

The vacuum is then established and an array of tips are picked up and loaded with, e.g, sample, for dispensing into the membrane extraction/filtration devices. The tips and sheath are disposed of, either simultaneously or separately, depending on the fit of the final two components, and the fluid delivery process may repeat for the next one or more reagents.

For elution, the vacuum is disconnected and the membrane extraction devices are lifted with the pipette head and tranferred to a new plate for gravity based elution, or positive pressure elution using the robotic head.

The invention can include any one or more of the following embodiments in any combination(s) therof.

| |
|---|
| -A system for performing automated sample extractions or filtrations, said system comprising: |
| a) a vacuum block configured to fluidly connect to a separate waste or other receptacle and a separate vacuum pump, said vacuum block being generally cuboid and having an array of holes therethrough, each hole having an upper edge; b) an array of vacuum connectors in said array of holes, each vacuum connector comprising: i) a hollow tube having a hub at a top end sized to fit over a pipette head of a separate robotic pipettor, ii) an outer ridge on an outer surface, said outer ridge meeting said upper edge at an angle of at least 7° to 90° from vertical, and iii) an inner ridge on an inner surface thereof; c) an array of extraction or filtration devices in said array of vacuum connectors, each extraction or filtration device comprising: i) a hollow tube having a top edge and a hub at a top end sized to fit over said pipette head and, ii) an inner ledge or protrusions on an inner surface therof and a frit or a membrane on said inner ledge or protrusions, iii) an outer surface, said outer surface meeting said inner ridge at an angle of at least 7° to 90° from vertical; wherein said system is capable of forming an air-tight seal between said vacuum block and said array of vacuum connectors and said array of extraction or filtration devices while under vacuum, and said air-tight seal being reversible using a force provided by said pipette head when not under vacuum. |
| -A method of automated sample processing; said method comprising: a) inserting an array of vacuum connectors into an array of holes in a vacuum block, wherein each vacuum connector meets an edge of a hole in said array of holes at an angle of 7-90° from vertical; b) inserting an array of extraction or filtration devices into said array of vacuum connectors with a pipette head of a robotic liquid handler, wherein each extraction or filtration device meets an inner ridge in a vacuum connector at an angle of 7-90° from vertical; c) drawing a liquid into a first array of pipette tips with said pipette head; d) dispensing said liquid into said array of extraction or filtration devices and activating a vacuum through said vacuum block, said vacuum pulling said liquid through said array of extraction or filtration devices into a waste or other receptacle; e) disposing of said first array of tips with said pipette head; f) drawing a wash solvent into a second array of pipette tips with said pipette head; g) dispensing said wash solvent into said array of extraction or filtration devices, said vacuum pulling said wash solvent through extraction or filtration devices into a waste or other receptacle; h) disposing of said second array of tips with said pipette head; i) optionally repeating steps f-h) as needed; j) venting said vacuum; and k) removing said array of extraction or filtration devices with said pipette head. |
| -A system for performing automated assays, said system comprising: a) a vacuum block configured to fluidly connect to a separate waste or other receptacle and a separate vacuum pump, said vacuum block being generally cuboid and having an array of holes therethrough, each hole having an upper edge; b) an array of vacuum connectors in said array of holes, each vacuum connector comprising: i) a hollow tube having a hub at a top end sized to fit over a pipette head of a separate robotic pipettor, ii) an outer surface meeting said upper edge of said hole at an angle of at least 7° to 90° from vertical, and iii) an inner surface thereof; c) an array of extraction or filtration devices in said array of vacuum connectors, each extraction or filtration device comprising: i) a hollow tube having a top edge and a hub at a top end sized to fit over said pipette head and, ii) an inner surface and a frit or a membrane on an inner ledge or protrusions on said inner surface, iii) an outer surface meeting said inner surface of said vacuum connector at an angle of at least 7° to 90° from vertical; wherein said system is capable of forming an air-tight seal between said vacuum block and said array of vacuum connectors and said array of extraction or filtration devices while under vacuum, said air-tight seal being reversible using a force provided by said pipette head when not under vacuum. |
| -A system for performing automated assays, said system comprising: a) a vacuum block configured to fluidly connect to a separate waste or other receptacle and a separate vacuum pump, said vacuum block being generally cuboid and having an array of holes therethrough, each hole having an upper edge; b) an array of vacuum connectors in said array of holes, each vacuum connector comprising: i) a hollow tube having a hub at a top end sized to fit over a pipette head of a separate robotic pipettor, ii) an outer surface meeting said upper edge of said hole at an angle of at least 7° to 90° from vertical, and iii) an inner surface thereof; c) an array of extraction or filtration devices in said array of vacuum connectors, each extraction or filtration device comprising: i) a hollow tube having a top edge and a hub at a top end sized to fit over said pipette head, ii) an inner surface and a frit or a membrane on an inner ledge or protrusions on said inner surface, iii) an outer surface meeting said inner surface of said vacuum connector at an angle of at least 7° to 90° from vertical; d) an array of sheaths in said array of extraction or filtration devices, each sheath in said array of sheaths comprising: i) a hollow tube having a top edge and a hub at a top end sized to fit over said pipette head and, ii) an outer surface meeting said inner surface of said extraction or filtration device at an angle of at least 7° to 90° from vertical; wherein said system is capable of forming an air-tight seal between said vacuum block and said array of vacuum connectors and said array of extraction or filtration devices while under vacuum, said air-tight seal being reversible using a force provided by said pipette head when not under vacuum. |
| -A method of automated sample processing; said method comprising: a) inserting an array of vacuum connectors into an array of holes in a vacuum block, wherein each vacuum connector meets an edge of a hole in said array of holes at an angle of 7-90° from vertical; b) inserting an array of extraction or filtration devices into said array of vacuum connectors with a pipette head of a robotic liquid handler, wherein each extraction or filtration device meets an inner ridge in a vacuum connector at an angle of 7-90° from vertical; c) inserting a first array of sheaths into said array of extraction or filtration devices with said pipette head; d) drawing a liquid into a first array of pipette tips with said pipette head; e) dispensing said liquid into said array of sheaths and activating a vacuum through said vacuum block, said vacuum pulling said liquid through said array of extraction or filtration devices into a waste or other receptacle; f) disposing of said first array of sheaths and said first array of tips with said pipette head; g) repeating steps c-f) as needed with one or more liquids; h) venting said vacuum; and i) removing said array of extraction or filtration devices with said pipette head. |
| -Any system or method herein described, further comprising:a) an array of sheaths in said array of extraction devices, each sheath comprising: i) a hollow tube having a hub at a top end sized to fit over said pipette head; ii) an outer ridge or protrusions on an outer surface, said outer ridge or protrusions sitting on said top edge. |
| -Any system or method herein described, each sheath further comprising a bottom end having an inner surface, wherein said inner surface meets a bottom end of a separate pipette tip at an angle of 1-4° from vertical, such that said sheath is lifted when said separate pipette tip is lifted. |
| -Any system or method herein described, wherein each hole (in the vacuum block) has a first diameter at a top end of said hole and a second diameter at a bottom end of said hole, wherein said first diameter is larger than said second diameter and wherein said second diameter is larger than a diameter of a bottom end of a vacuum connector. Alternatively, each hole has a first diameter for a top portion of said hole and a step down to a second smaller diameter at a bottom postion of said hole, and wherein said vacuum connector meets said step down at an angle of 7-90° from vertical (when either tipped slightly to touch same or when vertical). |
| -Any system or method herein described, wherein said vacuum connector, said extraction device and said sheath comprise polypropylene. |
| -Any system or method herein described, where said pipette head has array of pipette heads, each pipette head has an outer surface tapered at an angle of 1-4° and each hub has an inner surface having said angle. In the alternative, each pipette head has an outer surface without taper and each hub has an inner surface without taper. |
| -Any system or method herein described, wherein each array is an array of 8 by 12 sized to fit a standard microtiter plate or any other microtiter plate array format, such as 3X4 (12 wells) or 4X6 (24 wells). |
| -Any system or method herein described, said array of vacuum connectors being separate vacuum connectors that are inserted into said array of holes with said pipette head. Alternatively, said array of vacuum connectors can be an integral array of vacuum connectors. These can be placed using a gripper, or a pipette head if equipped with hubs in at least the corners if not throughout the array |
| -Any method herein described, further comprising a final step of eluting said array of extraction or filtration devices into an array of wells by gravity drainage or positive pressure. |
| The various pipetted liquids can of course vary with the assay in both identity and number of liquids applied. Liquids typically include a sample liquid, a lysis solution if whole cells are in the sample, one or more binding solutions, wash liquids, various treatment or detection liquids and the like. |
| Any array of sheaths or vacuum connectors can be separate devices, positioned with the pipette head. If arrayed on an integral plate, they can be positioned with either the pipette head or with the gripper of the robot. In addition, the vacuum connectors and sheaths can be reusable, but are preferably used once and disposed of. |

As used herein, a "robotic liquid handler" is a robotic system, used for automation in chemical or biochemical laboratories that dispenses a selected quantity of reagent, samples or other liquid to a designated container. The simplest version can dispense an allotted volume of liquid from a motorized pipettor or syringe; more complicated systems can also manipulate the position of the plates, as well as dispensers and containers (often a Cartesian coordinate robot) and/or integrate additional laboratory devices or add-ons, such as microplate reader, heat sealer, heater, shaker, bar code reader, spectrophotometric or separation devices and instruments, storage devices, waste containers and incubators. In addition to the motorized pipettor or syringe, robotic liquid handlers also have trays for sample wells or trays for holding sample vials, trays of pipette tips that fit the pipettor, and containers of solvents.

The methods described herein require a robotic liquid handler capable of manipulating the position of pipette tips on the Cartesian, 3-axis movements, typically implemented by means of an arm, and having multi-pipetting and preferably also having plate movement capabilities. To further reduce human interaction, it may also be desirable to have spectrophotometric or other reader instruments integrated with the handler.

Exemplary robotic liquid handlers include the Star, Starlet, Vantage or Nimbus from Hamilton Company; Bravo Automated Liquid Handling Platform from Agilent; the epMotion from Eppendorf; the Biomek 4000 or NX or FX from Beckman Coulter; the PIPETMAN from Gilson; the Freedom Evo from Tecan; and PAL systems from CTC or the MPS from GERSTEL, which are capable of being modified to perform pipetting and integrated with a variety of separation-mass spectrometric instruments. However, any commercially available robotic liquid handler can be used and/or modified to perform the disclosed separations.

The term "gripper" or "plate gripper" refers to a part of most commercial robotic liquid handlers that generally consists of 2 prongs that squeeze together to pick up and move parts, such as microtiter plates or vacuum blocks.

As used herein, the term "membrane" refers to a thin pliable film that acts as a porous barrier. In this application, the membrane can be used for filtration or directly for extraction, or to contain solid phase sorbent (positioned between 2 membranes). A frit or disc is similar but may be thicker or less flexible.

The term "hub" refers to the wide opening end of the pipette tip, membrane extraction device, vacuum connector, or sheath, which makes contact with the pipetting head of the robotic liquid handler. Most hubs are tapered on the inner surface to provide a friction fit over the tapered exterior surface of the pipette head, but the Hamilton system components lack this taper and instead uses an expandable O-ring.

The phrase "pipette tip" refers to a tubular hollow funnel shaped device with hub designed to fit either a particular pipette head (such as Hamilton devices) or a universal pipette head (tapered). The pipette tip tapers to a fine point for accurate fluid control and to avoid splashing liquids.

The phrase "vacuum connector" refers to a tubular hollow device with hub designed to fit either a particular pipette head (such as Hamilton devices) or a universal pipette head (tapered). It has an exterior horizontal ridge or surface and an interior horizontal ridge or surface, wherein the point of contact provides a 7-90° angle for a reversable air-tight seal with other components, such as a vacuum block or extraction device. The shape of the bottom end may vary, but if the bottom hole is too narrow, flow rates through the device may be limited. Wide bore pipette tips may make viable vacuum connectors.

The term "sheath" as used herein is a tubular hollow device with hub designed to fit either a particular pipette head (such as Hamilton devices) or a universal pipette head (tapered). It need not form an airtight seal with other components and the shape of the lower end may vary.

As used herein the terms "ridge" or "ledge" are used interchangeably, and when positioned horizontally on the outside or the inside of a hollow tube, provides either a surface or an edge that can support another device. Since the tube is of circular cross-section, ledges and ridges are annular where needed to form a vacuum seal. However, where a vacuum seal is **not** needed, such as the inner ledge in an extraction device that supports the membrane or the outer ridge on a sheath, it may be intermittent, e.g., 3 or more protrusions from a surface.

The term "extraction device" may mean a hollow tube with hub and either membranes, frit, sorbent or combination thereof. The sorbent may rest on a membrane or a frit or may be sandwiched between two. It may be made of more than 1 component, as shown herein. It has an exterior ridge or surface, wherein the point of contact provides a 7-90° angle for a reversible air-tight seal with other components, such as a vacuum block or vacuum connector. There is also an interior ridge or surface or protrusions to support the membrane or frit. The shape of the bottom end may vary, but herein we show a needle-like tip of much smaller diameter than the membrane or frit, and is tapered to a small outlet.

As used herein, "air-tight" is used to describe the seal between the adaptor and the syringe or pipette tip, or the seal between parts for a vacuum system, and simply means that negligible gases (or no gases) pass at this point of contact and sufficient vacuum is maintained for good fluid flow. A vacuum pump that is capable of achieving at least 200 mbar vacuum is viable for this vacuum process with this air-tight setup.

As used herein a "reversible air-tight fit" is air-tight under a vacuum pull, but is easily released without vacuum by the lifting action of the pipette head.

The terms "resin" and "sorbent" are used interchangeable to refer to extraction media. The extraction media can be dry and in the form of particles or beads. Alternatively, the extraction media can be water- or buffer-swollen to form a gel matrix having pores either larger or smaller than the analyte.

As used herein, the term "target compounds" refers to the compounds that are being separated from the sample matrix for analysis either using filtration or extraction or extraction media. In some embodiments, the target compounds can include biomolecules such as DNA, RNA, proteins and peptides, polynucleotides, lipids and polysaccharides. The target compounds may also include small chemical molecules.

The word "carrier" refers to a support that holds pipette tips or other accessories. It is essentially a rectangle having the same footprint as a microtiter plate, but has holes into which pipette tip, sheaths, or vacuum connectors can be set. It can also refer to a larger support that holds racks of pipette tips or well plates or reagents on the robotic deck.

The use of the word "a" or "an" when used in conjunction with the term "comprising" in the claims or the specification means one or more than one, unless the context dictates otherwise.

The term "about" means the stated value plus or minus the margin of error of measurement or plus or minus 10% if no method of measurement is indicated.

The use of the term "or" in the claims is used to mean "and/or" unless explicitly indicated to refer to alternatives only or if the alternatives are mutually exclusive.

The terms "comprise", "have", "include" and "contain" (and their variants) are open-ended linking verbs and allow the addition of other elements when used in a claim.

The phrase "consisting of" is closed, and excludes all additional elements.

The phrase "consisting essentially of" excludes additional material elements, but allows the inclusions of non-material elements that do not substantially change the nature of the invention.

The following abbreviations are used herein:

| **ABBREVIATION** | **TERM** |
|---|---|
| ANSI | American National Standards Institute |
| C-THC | 11-nor-9-carboxy-delta-9-tetrahydrocannabinol |
| DNA | Deoxribonucleic acid |
| RNA | Ribonucleic acid |

### BRIEF DESCRIPTION OF THE DRAWINGS

**FIG. 1A** displays a vacuum block in cross section and **FIG. 1B** in perspective.
**FIG. 2A** displays a vacuum connector in cross section and **FIG. 2B** is a closeup of the exterior ridge.
**FIG. 3A** displays an extraction or filtration device in cross section, said device made of a lower membrane portion and upper cap portion that are friction fitted together. The membrane is added to the lower portion before assembly, and can be a frit, a disc, a membrane, or a pair of same with sorbent therebetween. Herein, we only show a simple single membrane. Such a device can be used for a number of different separation means, depending on the membrane and sorbent chosen.
**FIG. 3B** shows the extraction device **300** inserted into a vacuum connector **200** in cross section.
**FIG. 4A** displays a sheath in cross section, and **FIG. 4B** is an array of sheaths or funnel plate seen from the underside.
**FIG. 5A** shows a pipette tip with no taper on the left and **FIG. 5B** shows a pipette tip with taper on the right. The taper is exaggerated for visibility. **FIG. 5A** also has an inner and outer ridge at the bottom of the hub.
FIG. 6A-C displays the parts from **FIG. 1-4** assembled and the pipette tip approaching the assembly for dispensing of a liquid. The robotic handler is omitted for clarity.
**FIG. 7A** and **FIG. 7B** provide exemplary method of use.

### DETAILED DESCRIPTION

While multiple embodiments are disclosed, still other embodiments will become apparent to those skilled in the art from the following detailed description. As will be apparent, certain embodiments, as disclosed herein, are capable of modifications in various aspects, without departing from the spirit and scope of the claims as presented herein. Accordingly, the drawings and detailed description are to be regarded as illustrative in nature and not restrictive.

The invention provides systems, devices and methods for high throughput extraction of chemical and biological analytes of interest using a vacuum system. This process is different from all other types of systems because the vacuum is not utilized in the final elution step. Instead, the vacuum is vented and a final elution step is gravity or positive pressure driven. This allows the collection of the target analytes with less or even no risk of contamination, and in addition, greatly improves the efficiency and throughput of the overall process.

To create a vacuum seal between 2 parts, it is intuitive to think that the parts must have similar shapes with high surface area connecting the parts. Alternatively, using a gasket or O-ring would seem necessary if the parts in some way did not "stick together". Unfortunately, such a tight seal **impedes** automation if the parts are difficult to separate. For example, if a pipette tip is loaded into a vacuum block with a hole that has a diameter matching the outer diameter of the pipette tip where it tapers at, for example, 4-5 degrees or less, the pipette tip will become lodged into the hole and become very difficult to remove. In fact, when we tested this, the **entire vacuum block** was lifted when a pipette tip was lifted.

What is desired for automation is the ability to load a disposable part into the vacuum block, such that a vacuum can be robustly maintained, and yet the part can be easily removed after the vacuum is turned off and vented.

We have discovered that if the point of contact between two parts has a connection angle of at least 7° and as high as 90° from vertical the parts **will** form an air tight seal, and yet be easily reversible when lifted with the pipette head of a robotic liquid handler. Thus, we have modified a number of disposable parts herein to include internal and/or external horizontal ridges (an annular protrusion) or surfaces to provide this contact angle. All parts must fit together for high throughput, and thus the components are designed to function together as a complete system, even if the parts are sold separately.

Reversible air-tight fits are not the only consideration for optimizating a high throughput robotic assay system-contamination is also a significant concern. The extraction device or solid phase extraction cartridge should not be positioned such that the bottom is exposed to splashing from other extraction devices, or contamination from the vacuum block. Instead, it would be preferable to have the extraction device positioned into a disposable part that creates the vacuum seal, thus separating the extraction devices from each other and from the vacuum block. We refer to this part as the "vacuum connector", and it provides the air-tight reversible seal with the vacuum block. Since it is also a disposable component, the contamination is reduced. A similar device on top called the sheath protects the extraction device from being contaminated by the pipette tips that deliver the sample solutions.

Still yet another concern with creating a robust system is that device wobble be minimized, as wobble can prevent good vacuum seating. Most importantly, wobble will cause misalignment and robotic failure to access and move parts. Herein, we control both height and the relative diameters of devices so as to minimize wobble. Generally speaking, devices are not so tall as to create wobble, and the diameters decrease gradually or in stepwise fashion so that the smaller ends fit into closely fitted cavities.

Turning now to the figures, in **FIG. 1** we see a vacuum block **100** with holes **101** arranged in an array on top that mirror the holes in a 96 well microplate. Underneath the vacuum block is a waste receptacle **111** connected to vacuum pump **113.** Looking at a hole **101** in cross section, we can see that the diameter is larger at the top, then there is a step down to a smaller diameter and the step down has an edge **103.** The narrowing of the hole helps to ensure that the vacuum connector stays perfectly vertical as needed for the vacuum seal. An optional cavity **105** exists under the block. In **FIG. 1B** we see a single vacuum connector **200** in the block **100.**

Although the step down is sized so as to be bigger than the vacuum conector, if there was a small amount of tilt, the 7-90° angle at the contact point would still prevent it from sticking therein. It could also be a tapered hole (conical), which would achieve the same effect provided it is bigger than the connector and meets at the 7-90° angle such that it cannot get stuck therein, but the step down is easier to manufacture.

**FIG. 2A** shows a vacuum connector **200** which is a hollow tube, generally conical, with outlet **201** at a bottom end, a tapered wall **203,** outer ridge **211,** inner ridge **205,** hub **207** and inner surface of the hub **209.** This hub is designed to fit a Hamilton robot, and thus inner surface **209** is not tapered, but where designed to be used with universal pipette systems, the inner surface would be tapered at about 2-4° from vertical.

**FIG. 2B** shows a close up of ridge **211,** which we can see is a small protrusion or ridge circumventing the outer surface, which has a curved edge rather than a sharp edge. The curve is optional, as the exact shape of the ridge is not critical, so long as it meets the edge of hole **101** at a 7-90° angle from vertical. Here, the slope of the curve (derivative) at the contact point provides an angle (***α***) from vertical of about 45°.

The exact shape of the vacuum connector is not critical, provided that the hub interior surface both fits the pipette head and allows a loose insertion of the extraction device into the vacuum block. We have shown a generally conical device, but it could be shaped like a buchner funnel, as in **FIG. 3****,** and could also be a generally straight tube.

**FIG. 3** shows an extraction device **300** which is made of two parts for ease of manufacture. The membrane needle **331** is again a hollow tube with needle-like outlet **301** below a larger section, such that the entire membrane needle **331** is shaped like a Büchner funnel. The needle ensures minimal splashing and the larger top provides extra surface area for the membrane or disc. The tapered wall **303** is at about 21° from vertical, thus fulfilling the 7-90° requirement for an air-tight reversible seal with the inner ridge **205** of the vacuum connector.

Ledge **305** on its inner surface functions to support a membrane or frit or disc. The ledge **305** need not be annular but can be 3 or more protrusions or combinations of an annular ledge and protrusions. See e.g., US2022088537 for variations on the extraction device. Thus, the extraction device can be fitted with membranes or frits or discs, and may have or not have resins too, such as size exclusion resins, ion exchange resins, affinity resins, and the like. The extraction device can thus be used in a large number of assay types by varying the materials therein, including filtration, ion exchange, size exclusion, affinity separations, and the like.

The upper portion of extraction device **300** is called a membrane cap **333,** and it too is a hollow tube with a hub **307** at a top end and an inner surface **309** that is tapered or not, depending on which type of robotic system it is designed for. The bottom end of cap **333** is sized to fit inside the open top of the membrane needle **331,** with very little taper (1-4°, preferably 1-2° from vertical), which ensures that the two parts stick together and can be moved as a single unit. In manufacture the parts are injection molded, the membrane or frit or disc inserted onto the membrane needle and then the cap inserted into the membrane needle, preferably seating all the way down to rest on membrane/frit/disc on **335** preventing its motion.

The outer ridge or ledge or surface (here **303**) is positioned well below the hub in both the vacuum connector and the extraction device. This helps to further minimize contamination.

Finally, the hub of the vacuum connector has a slightly larger inner diameter than the middle portion of the membrane device, cap adaptor **333,** such that the membrane device can be inserted in and out of the vacuum connector without resistance. Moreover, this slight difference in diameter ensures that the extraction device is aligned vertically, improving the vacuum seal and providing accurate pipetting head access.

Preferably, the vacuum connector is long enough to have space between the bottom narrow end and of the inserted extraction device, ensuring that the membrane device cannot be contaminated by any potential splashing inside the vacuum block (external to the corresponding vacuum connector). See **FIG. 3B** showing extraction device **300** inserted into vacuum connector **200.**

The vacuum block can be connected directly to a large waste container, which can be discarded or changed periodically, or pumped directly to waste.

When sample solutions are loaded on top of the membrane device, pipette tips will have sample solution on their exteriors, leading to possible contamination. Thus, we have designed another disposable part to protect the hub **307** and interior of extraction device **300.** **FIG. 4A** shows sheath **400A** which is a hollow tube with hub **407** and inner surface of hub **409** fitting the same pipette head, as do all other parts of this system. Sheath **400A** need **not** have a vacuum seal since it is the uppermost device and does not hold any liquid. Thus, exterior ridge or protrusions (here shown vertical fins **411**) allow it to just rest on top of the hub **307** of extraction device **300** at a 90° angle from vertical. The bottom end **401** of the sheath can vary in size or shape, provide it fits into the hub **307** of extraction device **300.** In one embodiment, it is tapered at its bottom end to fit the taper of a pipette tip (1-4°, preferably 1-2°) so that when the pipette tip is pulled up, it pulls the sheath with it for one shot disposal. However, it could also be a loose fit, and removed in a separate pipette head action.

In some cases it may be important that the sheath not connect directly to the pipette tip or come in contact with the pipettor head, as the sheath may become contaminated with sample solution. In such case, the sheath can be part of a plate (of 8, 12, 24, 48 or 96 funnels) which can be loaded and unloaded with a gripper or by hub with a pipette head. The sheath or funnel plate **400B** is shown in **FIG. 4B** and can be designed to have an appropriate side thickness or ridge or textured surface **421** for a common "gripper" of a robotic liquid handler to access. It is also possible that the sheath plate has a hub that is not used for sample loading, but only for a robotic liquid handler to access and move the plate.

**FIG. 5** shows two pipette tips. Pipette tip **500A** and **500B** with outlet **501,** wall **503** and hub **507,** having inner surface **509A** being a straight vertical wall, and **509B** having a taper to fit universal pipette heads. Also shown in **FIG. 5A** is an inner ridge **511,** which is necessary if this pipette tip is going to be used as a vacuum connector. The pipette tip in **FIG. 5B** cannot be used as a vacuum connector because it does not have an inner ridge to contact the extraction device at the requisite angle. However, either pipette tip is capable of delivering the sample solution to the extraction device.

**FIG. 6A** shows a perpective view of the block **100** with vacuum connector **200,** extraction device **300** and sheath **400** therein. In panel **6B** we see the pipette tip **500** approaching sheath **400,** and in **6C** we see tip **500** inserted into sheath **400** for sample delivery.

FIG. 7A-B details one method of use, including optional **701** picking up an array of vacuum connectors with the pipette head and **703** moving them onto vacuum block. At **705** or any other point before **723,** we turn on vacuum pump. At **707** we pick up an array of extraction devices with the pipette head and **709** move them into the vacuum connectors. **711** is optional, but preferably we pick up an array of sheaths with the pipette head, and move them into the extraction devices. At **713** the pipette head with pipettes aspirates sample solution and if present **715** insert the tips into the sheaths, for dispensing **717** sample into the extraction devices.

If the sheaths were provided in a fixed array, that plate can be removed at **719** using the gripper function of the robot or the entire plate picked up with the pipette head if the sheaths have the requisite hub shape. If separate units, the sheaths are disposed of with the pipette head by preferably removing them by friction fitting with a disposable pipette tip (to prevent contamination of the robotic head). Sample loading is given time to complete at **721,** and then wash or other solutions added as before at **723. 723** can include a variety of steps or solutions to pass through the extraction devices, as needed for the assay being performed. At **725** we vent the vacuum, and at **727** we add elution solution to the extraction devices, but this may preferably be delayed till after **729** where we move the extraction devices, again using the pipette head, to an elution plate. At **731** we add elution solution, if not already done, and if needed time is given for its action to occur. At the end or any other convenient time, the extraction devices **733** and optionally vacuum connectors **735** are disposed of, and the process can be repeated.

### EXPERIMENT 1

A well plate of 96 lysed whole blood samples (0.05 mL whole blood, 0.05 mL lysis buffer, and 10 µL proteinase K enzyme) was loaded onto the Hamilton Nimbus 96 robotic liquid handler deck to extract DNA. The vacuum connectors (a rack of 96 300 µL CO-RE II Hamilton pipette tips) were pre-loaded into the vacuum block, which was mounted on the deck occupying a single pedastle position, with 0.25" holes with an 80° camfer (beveled edge), providing the requisite 7-90° angle. The membrane extraction devices, comprising silica fibers, were loaded into the vacuum connectors, and a 96 funnel plate was subsequently positioned on top.

The robotic liquid handler aspirated 75 µL binding buffer, and dispensed into the lysed whole blood samples. Then the sample solutions were mixed by aspirating and dispensing the solutions 25 times. The samples were slowly added to the silica membrane extraction devices while the vacuum was turned on (by the robotic program).

After the sample was passed through the membrane extraction devices, 200 µL of a first wash solvent was added and passed through the membrane extraction devices; this step was repeated. Then 200 µL of a second wash solvent was added and passed through the membrane extraction devices; this step was repeated 2 times. The silica membranes were dried under vacuum for 60 seconds, during which time the gripper of the robotic liquid handler removed the funnel plate from the extraction devices.

After the vacuum drying, the vacuum was turned off and vented with the program. Then the robotic liquid handler aspirated 80 µL of elution solvent (heated at 50° C with a heater/shaker on the deck), and dispensed the solvent onto the top of the silica membrane. After 30 seconds, the robotic liquid handler aspirated air, picked up the extraction devices with the 96 tip pipette head, and moved over and into the elution well plate. The robotic liquid handler dispensed the solution, and the eluate was collected in the elution well plate for DNA analysis.

The sample loading and wash steps are very rapid, taking just several microliters passing through per second under vacuum. The total DNA extraction time, from the start of mixing the binding buffer with the sample solution to the final elution, took approximately 10 minutes to complete.

This method was performed using a single source of whole blood. The concentration of DNA was found to have an average of 28.7 ng/µL with less than 15% relative standard deviation. This amount of DNA was found to be higher than two of the most popular commercial products for performing this assay, and the results were obtained at least five times faster than both methods.

It should be noted that we have performed similar studies with larger volumes of lysed whole blood (up to 200 µL) by performing the sample loading steps multiple times. This provides higher yields of DNA, but results in slightly longer extraction times (app. 1 additional minute per increase in 50 µL of whole blood).

### EXPERIMENT 2

The same experimental setup in Experiment 1 was used in this experiment, except 24 array positions were used. In this experiment, 11-nor-9-carboxy-delta-9-tetrahydrocannabinol (C-THC), the primary metabolite of the active ingredient in marijuana, was extracted using C18 discs with the membrane extraction device. The C18 membrane extraction devices, positioned on top of the vacuum connectors, was first conditioned by passing organic solvent through the discs under vacuum. With the funnel plate positioned on top of the devices, the urine samples (0.11 mL of hydrolyzed urine) were passed through the devices. Subsequently, 100 µL of 30% methanol was passed through the devices to wash and remove sample matrix. After vacuum drying, the vacuum was turned off, and 100 µL of acetonitrile was added on top of the C18 discs. The robotic liquid handler aspirated air, then picked up the extraction devices and eluted the analytes into vials in the vial rack.

The 24 samples were extracted in this method in under 5 minutes. Most importantly, the recoveries of C-THC were found to be greater than 90% with less than 10% relative standard deviations.

Each of the following references are incorporated by reference in its entirety for all purposes.
ANSI SLAS 1-2004 (R2012): Footprint Dimensions, last updated January 9, 2004
ANSI SLAS 2-2004 (R2012): Height Dimensions, last updated January 9, 2004
ANSI SLAS 3-2004 (R2012): Bottom Outside Flange Dimensions, last updated January 9, 2004
ANSI SLAS 4-2004 (R2012): Well Positions, last updated January 9, 2004
ANSI SLAS 6-2012: Well Bottom Elevation, last updated April 09, 2009
US2022088537, Membrane devices for filtration and extraction

## Claims

1. A system for performing automated assays, said system comprising:
a) a vacuum block configured to fluidly connect to a separate receptacle and a separate vacuum pump, said vacuum block being generally cuboid and having an array of holes therethrough, each hole having an upper edge;
b) an array of vacuum connectors in said array of holes, each vacuum connector comprising:
i) a hollow tube having a hub at a top end sized to fit over a pipette head of a separate robotic pipettor,
ii) an outer ridge on an outer surface, said outer ridge meeting said upper edge of said hole at an angle of at least 7° to 90° from vertical, and
iii) an inner ridge on an inner surface thereof;
c) an array of extraction or filtration devices in said array of vacuum connectors, each extraction or filtration device comprising:
i) a hollow tube having a top edge and a hub at a top end sized to fit over said pipette head,
ii) an inner ledge or protrusions on an inner surface thereof and a frit or a membrane on said inner ledge or protrusions,
iii) an outer surface, said outer surface meeting said inner ridge of said vacuum connector at an angle of at least 7° to 90° from vertical;
wherein said system is capable of forming an air-tight seal between each of said vacuum block and said array of vacuum connectors and said array of extraction or filtration devices while under vacuum, said air-tight seal being reversible using a force provided by said pipette head when not under vacuum.

2. The system of claim 1, further comprising an array of sheaths in said array of extraction or filtration devices, each sheath comprising:
i) a hollow tube having a hub at a top end sized to fit over said pipette head;
ii) an outer ridge or protrusions on an outer surface, said outer ridge or protrusions sitting on said top edge of said extraction or filtration device.

3. The system of claim 2, each sheath further comprising a bottom end having an inner surface, wherein said inner surface meets a bottom end of a separate pipette tip at an angle of 1-4° from vertical, such that said sheath is lifted when said separate pipette tip is lifted.

4. The system of claim 2-3, further comprising an integral array of sheaths connected as a single plate.

5. The system of claims 1-4, wherein each hole has a first diameter at a top end of said hole and a second diameter at a bottom end of said hole, wherein said first diameter is larger than said second diameter and wherein said second diameter is larger than a diameter of a bottom end of said vacuum connector.

6. The system of claims 1-4, wherein each hole has a first diameter for a top portion of said hole and a step down to a second smaller diameter at a bottom position of said hole, and wherein said vacuum connector meets said step down at an angle of 7-90° from vertical.

7. The system of claims 1-6, wherein said vacuum connector, said extraction or filtration device and said sheath comprise polypropylene.

8. The system of claims 1-7, where said pipette head is array of pipette heads, and each pipette head has an outer surface tapered at an angle of 1 -4° and each hub has an inner surface having said angle.

9. The system of claims 1-7, where said pipette head is array of pipette heads, each pipette head has an outer surface without taper and each hub has an inner surface without taper.

10. The system of claims 1-9, wherein each array is an array of 8 by 12 sized to fit a standard microtiter plate.

11. A method of automated sample processing; said method comprising:
a) providing an array of vacuum connectors in an array of holes in a vacuum block, wherein each vacuum connector meets an edge of a hole in said array of holes at an angle of 7-90° from vertical;
b) inserting an array of extraction or filtration devices into said array of vacuum connectors with a pipette head of a robotic liquid handler, wherein each extraction or filtration device meets an inner ridge in a vacuum connector at an angle of 7-90° from vertical;
c) drawing a first liquid into a first array of pipette tips with said pipette head;
d) dispensing said first liquid into said array of extraction or filtration devices and activating a vacuum through said vacuum block, said vacuum pulling said first liquid through said array of extraction or filtration devices into a receptacle;
e) disposing of said first array of tips with said pipette head;
f) optionally repeating steps c-e) as needed for one or more liquids;
g) optionally drying extraction or filtration devices under vacuum;
h) venting said vacuum; and
i) removing said array of extraction or filtration devices with said pipette head.

12. The method of claim 11, said array of vacuum connectors being separate vacuum connectors that are inserted into said array of holes with said pipette head.

13. The method of claim 11, said array of vacuum connectors being an integral array of vacuum connectors inserted into said array of holes with said pipette head or with a gripper of said robotic liquid handler.

14. The method of claims 11-13, further comprising step j) eluting said array of extraction or filtration devices into an array of wells by gravity drainage or positive pressure.

15. A method of automated sample processing; said method comprising:
a) inserting an array of vacuum connectors into an array of holes in a vacuum block, wherein each vacuum connector meets an edge of a hole in said array of holes at an angle of 7-90° from vertical;
b) inserting an array of extraction or filtration devices into said array of vacuum connectors with a pipette head of a robotic liquid handler, wherein each extraction or filtration device meets an inner ridge in a vacuum connector at an angle of 7-90° from vertical;
c) inserting a first array of sheaths into said array of extraction or filtration devices;
d) drawing a liquid into a first array of pipette tips with said pipette head;
e) dispensing said liquid into said array of sheaths and activating a vacuum through said vacuum block, said vacuum pulling said liquid through said array of extraction or filtration devices into a receptacle;
f) disposing of said first array of sheaths and said first array of tips with said pipette head;
g) repeating steps c-f) as needed with one or more liquids;
h) venting said vacuum;
i) optionally drying extraction or filtration devices under vacuum; and
j) removing said array of extraction or filtration devices with said pipette head.

16. The method of claim 15, further comprising step k) eluting said array of extraction or filtration devices into an array of wells by gravity drainage or positive pressure.
